# DEMANDE DE BREVET EUROPEEN

(11) **EP 1 449 673 A2**
(43) Date de publication de la demande: **25.08.2004**
(21) Numéro de dépôt: 03447076.5
(22) Date de dépôt: 01.04.2003
(51) Int. Cl.: B41M 1/34, B41M 1/12, B23H 9/06, B41C 1/14

(54) **Méthode d'impression et/ou peinture sur une ou deux faces d'une partie d'une plaque de verre avant fixation par cuisson au four et après fragmentation et sablage**

(30) Priorité: 02.04.2002 BE 200200236
(71) Demandeur: Gellens, Geert, 3001 Heverlee Leuven (BE)
(72) Inventeur: Gellens, Geert, 3001 Heverlee Leuven (BE)

(57) **Abrégé**

En cas de cuisson au four, le fait de fragmenter préalablement et de réassembler ensuite les plaques de verre évitera des problèmes lors du montage, au moins dans le cas où on ne cuit aucune des pièces qui touchent aux côtés. On économise de l'énergie à la cuisson et on aura la possibilité d'obtenir des produits finis de grande taille en utilisant un petit four.

L'application de la peinture sera facilitée par le matage ou sablage préalable. L'adhérence sera meilleure, la température de cuisson minimale moindre, et des irrégularités dans le verre deviendront invisibles. La déformation et l'écoulement seront amoindris et par conséquence, l'assemblage facilité.

Quand, lors de l'impression ou de la peinture sur verre, aussi dans le cas de non cuisson, on applique une couche ou pellicule non-transparente, l'image de reste ne perturbera plus de l'autre côté, et on n'apercevra plus d'arrière-plans perturbants.

Quand les nuances de gris dans le dessin original pour la sérigraphie sont appliquées au moyen traditionnel de la technique de la gravure du cuivre, elles donnent une dynamique extra et la possibilité de combiner des formes et des nuances de gris.

## Description

Domaine : l'innovation concerne le fait de peindre et/ou d'imprimer sur une partie d'une plaque de verre sur une ou deux faces, ceci après sablage et après fragmentation. Par après, ceci peut éventuellement être fixé par cuisson dans un four.

La cuisson dans le four est un procédé pendant lequel la peinture est mise sur du verre. Après quoi la peinture se fige dans le verre. (vitrification) Il est nécessaire que ceci ce fasse à une température plus élevée que celle où le verre devient mou. Ce point diffère pour chaque sorte de verre, ceci dépendant de la structure chimique de chaque verre.

L'innovation peut être entre autres utilisée dans les portes d'armoire, les portes classiques, les fenêtres, les vitres, les décorations murales, montées ou non sur un châssis, encastrée ou non, fixées ou non par des charnières.

Le verre peut être collé en double, triple ou plusieurs couches. L'impression ou la peinture sera mise normalement, mais pas obligatoirement, sur le verre extérieur ; on peut la mettre aussi bien sur le côté « air » que sur le côté « verre ».

L'innovation concerne aussi bien la méthode que les produits

Unité d'innovation : un procédé qui rend possible l'impression ou la peinture sur double face sur du verre plat ordinaire mais aussi sur du verre artistique est développé, ceci avec l'intention de cuisson dans le four.

Verre qui doit être collé pour former des panneaux doubles ou multiples, à monter dans un châssis, ou fixés à des charnières, ou encastrés, ou tenant par soi-même.

Ce procédé consiste en plusieurs sous-procédés. Chacun de ces sous-procédés est utilisable plus largement. Il y a en plus des variantes de ces sous-procédés. Les différents procédés et leurs variantes forment ainsi une unité d'innovation.

### L'état de la technique :

Des plaques de verre produites industriellement, qu'on laisse refroidir sur un bain d'étain, dans un procédé de production dans des situations conditionnées très précises, sont vierges d'irrégularités dans le verre et sur la surface du verre. Ils sont complètement plats sans aucun gondolement et les irrégularités sur les bords sont coupées. En pratique, ce système n'est pas applicable lorsque l'on fait de la cuisson au four d'une façon artisanale.

Le verre est en général propice à la formation d'irrégularités sur les bords et au gondolement. Il n'est alors plus montable parfaitement dans une encoche d'une certaine dimension. Sauf si l'on réalise l'encoche de manière très profonde et large. Mais ceci est mauvais pour la stabilité de l'ensemble. De plus, il n'est plus possible de coller parfaitement le verre dos contre dos. Dans un rabat, le verre se gondolera. Il y aura aussi gondolement si le verre tient de lui-même. C'est pour ces raison-là que la fragmentation est nécessaire. En plus en cas de fragmentation, la capacité nécessaire du four est moindre (avec un petit four on sera capable d'avoir une production finale beaucoup plus élevée). D'autre part, la cuisson demandera beaucoup moins d'énergie.

Le verre est très difficile à imprimer, raison pour laquelle le sablage préalable s'impose. Dans le cas du sablage, la peinture tient mieux sur le verre. Par le sablage, la peinture de verre fond à une température plus basse avec le verre. Ceci a pour résultat que les côtés du verre se déforment moins et coulent moins. Ceci a pour conséquence que le réassemblage des fragments de verre soit plus facile.

Du verre sablé ou chimiquement rendu mat (matage) est esthétiquement très agréable, mais en plus le sablage ou le fait de rendre mat rendent les irrégularités éventuelles invisibles. Du verre soufflé et déroulé artisanalement contient presque toujours des irrégularités comme par exemple des bulles d'air.

Quand on casse le verre, des échardes de verre peuvent surgir. Ceci peut être résolu par l'application ou bien d'une plate-bande, ou bien d'une bande en forme de T dans la ligne de cassure. On peut également appliquer la technique de Tiffany ou la technique des vitraux en plomb. Ou encore sabler par le dessus ou rendre la ligne de cassure mate. Cette dernière action n'étant possible que si la plaque de verre a été préalablement sablée ou rendue mate. L'idéal étant la combinaison de sablage et de plate-bande.

Les techniques digitales et optiques qui font usage de filtres superposés pour convertir les teintes grises d'un dessin à crayon dans des gradations de gris, comme elles sont utilisées traditionnellement dans la technique de la sérigraphie, donnent un résultat médiocre. Ceci donne un résultat qui a l'aspect de points ou de lignes plus grands ou plut petits, qui ont un aspect mécanique sans aucune dynamique dedans. Ce problème peut être évité quand, dans le dessin originel, on fait application des gradations du gris au moyen de la technique traditionnelle de gravure sur cuivre, et puis on expose ce dessin directement sur l'émulsion fixée dans la gaze. Ceci donne un résultat esthétique nettement meilleur. En fait, cela donne une gradation de gris qui est constituée de lignes fines dans lesquelles la main de l'artiste est toujours visible, et dans lesquelles la gradation du gris est combinée avec des lignes de forme. L'artiste peut combiner les gradations de gris qui se constituent de fines lignes avec des lignes de forme fines ou grossières.

L'imprimé et/ou la peinture sur une face, aussi bien dans le cas du verre simple que du verre collé en plusieurs feuilles, donneront une vision différente d'avant et d'arrière sur la décoration, ceci en raison de différents facteurs. Entre autres : la peinture qui s'est fondue avec le verre du côté air a un tout autre aspect que celle du côté du verre. En outre, quand le dessin noir et blanc sera superposé sur la couleur, l'aspect du côté air sera tout à fait différent que celui du côté verre. Si la plaque de verre a été sablée ou rendue mate chimiquement, la différence sera encore plus grande. Si les deux faces de la plaque de verre sont sablées ou mates, l'image du côté arrière sera tout à fait floue.

Quand on imprime pas exactement symétriquement, le résultat est que l'image vue d'un côté sera dégradée par le reste de ce qu'on voit de l'autre.

Imprimer en symétrie est extrêmement difficile et en plus, quand on regarde d'en haut ou d'à côté, même si l'angle de vue s'approche de 90°, le résultat n'est pas esthétique. Ceci parce que l'image de reste sera toujours visible de l'autre côté. Pour cela, deux plaques de verre seront collées l'une contre l'autre, dos à dos. Ceci au moyen d'une couche de colle non-transparente ou en appliquant une pellicule non transparente.

Du verre rendu mat chimiquement ou sablé a une couleur fade. En plus un arrière-plan non uniforme ou un arrière-plan avec des lignes ou des formes de couleurs dérangeantes restent visibles à travers le verre. On peut y remédier également par une couche ou une pellicule non-transparente.

### Avantages

Revendication : Méthode d'application des nuances de gris dans un dessin sur verre au moyen de sérigraphie.

Méthode caractérisée par l'utilisation de la technique traditionnelle de la gravure sur cuivre, au moment de la fabrication du dessin original.

L'avantage est que les techniques digitales et optiques de gradation du gris qui utilisent des filtres superposés donnent un résultat esthétique médiocre dans le cas de la sérigraphie sur verre et en plus les nuances de gris faites par ordinateur en forme de ligne ou de point n'ont pas la même dynamique que les lignes faites à la main. Lignes faites à la main qui peuvent non seulement constituer des lignes de gradation mais en même temps des lignes de forme. L'artiste tient complètement la technique en main et peut jouer avec, ce qui a pour conséquence un meilleur résultat.

### Revendication : Méthode d'application de peinture sur verre cuite au four. (vitrification)

Méthode caractérisée par le sablage ou le matage (rendre mat) chimique préalable de la plaque de verre dans laquelle la grossièreté ou finesse du sablage ou du matage est partiellement déterminante pour l'épaisseur de la couche de peinture.

L'application de la peinture est rendue beaucoup plus facile par la rugosité du verre, et l'adhérence est également nettement meilleure. Il y a un meilleur figement de la peinture dans le verre à une moindre température, c'est-à-dire à une température plus proche du point où le verre commence à devenir mou. Ceci a pour conséquence qu'il ne se formera pas d'irrégularité dans ou sur le verre. Ceci a aussi pour conséquence que le sablage et le matage se conservent lors de la cuisson dans le four. Le sablage et le matage ne donnent pas seulement un effet esthétique mais rendent aussi d'éventuelles irrégularités dans le verre invisibles ou moins visibles. Ceci est non seulement important dans le cas du verre artistique (éventuellement coloré) soufflé à la main mais aussi dans le cas de verre plat normal. Parce que les côtés vont s'écouler ou gondoler plus faiblement à cause de la moindre température du four, il sera plus facile d'assembler. Dans le cas où la plaque de verre avant l'impression a été sablée ou rendue mate, les irrégularités qui ont été causées par la découpe peuvent être camouflées au moyen du sablage ou du matage de la ligne de cassure après le réassemblage et le recollage de la plaque de verre.

Revendication : Méthode de réassemblage d'une plaque de verre en partie imprimée et/ou peinte avec de la peinture qui sera fixée par cuisson au four.

Méthode caractérisée par la découpe préalable de la plaque de verre en pièce de telle sorte que tous les bords extérieurs de la plaque de verre fassent partie de façon intégrale de ces pièces qui ne seront pas cuites dans le four.

Le verre cuit au four tend à se déformer et à s'écouler et il n'est dans ce cas-là plus parfaitement assemblable dans une rainure dont les largeur et profondeur sont fixées. Sauf si on fait la rainure très profonde et très large, ce qui est mauvais à la stabilité de l'ensemble. Il n'est dès lors plus possible de coller parfaitement le verre dos à dos. Dans le cas d'un rabat il y aura gondolement. Le même gondolement apparaît quand le verre tient de lui-même. D'où le remède possible qui s'impose est la fragmentation.

En plus en cas de fragmentation, la capacité nécessaire du four est moindre (on sera aussi capable avec un four plus petit de produire des produits finaux de plus grandes dimensions) et la cuisson nécessitera moins d'énergie.

Variante de finition 1 : selon la revendication mentionnée, mais après l'impression et/ou la peinture, le recollage des lignes de cassures se produit.

L'avantage est que le collage par exemple avec de la colle époxy deux composants est rapide et solide. En plus toutes les pièces peuvent se mettre sur une surface de travail parfaitement plate et horizontale au moment du réassemblage.

Variante de finition 2 : Selon la variante 1 mais les lignes de cassure seront dissimulées avec une bande collée d'un matériel quelconque pliable, par exemple du plomb, emballé ou non, ou encore du caoutchouc ou n'importe quelle matière synthétique.

L'avantage de ceci est que des éventuelles irrégularités de niveau entre le verre cuit au four et les pièces de verre non cuites au four deviendront invisibles. Différences de niveau qui sont causées par la cuisson au four. Un avantage supplémentaire est que des éventuelles irrégularités sur et près de la cassure deviennent invisibles.

Variante de finition 3 : Selon la variante 1 mais au moment du collage, on met dans la cassure une bande fine en forme de T dans n'importe quel matériel souple.
Dans ce cas la jambe du T qui est debout a une longueur qui est égale à l'épaisseur du verre et la jambe qui est couchée sert à couvrir la ligne de cassure.

Dans ce cas, par préférence, préalablement au collage, on enlèvera aux deux côtés de la ligne de cassure une certaine épaisseur au moyen de fraisage ou de ponçage (le fraisage est préféré), épaisseur égale à celle de la bande que l'on va introduire.

L'avantage de ceci est que la bande qui couvre la ligne de cassure est mieux ancrée. A côté de ça, les avantages de la revendication 3 s'appliquent. L'avantage du fraisage est que les pièces s'ajusteront parfaitement.

Variante de finition 4 : Selon la variante 1 mais au moment du collage on met dans la ligne de cassure une bande aussi fine que possible, et dont la largeur est égale à l'épaisseur du verre. Ceci afin d'attirer l'attention sur la ligne de cassure.

Par préférence, préalablement au collage, on enlèvera aux deux côtés de la ligne de cassure une certaine épaisseur au moyen de fraisage ou de ponçage (le fraisage est préféré), épaisseur égale à celle de la bande que l'on va introduire.

L'avantage est que la ligne de cassure sur laquelle on a attiré l'attention donne un aspect esthétique très réussi. L'avantage du fraisage est que les pièces vont s'ajuster parfaitement.

Variante de finition 5 : selon la revendication 1 mais le réassemblage du verre se fait selon la technique Tiffany. L'avantage de cette technique est que toutes les pièces peuvent être placées sur une surface de travail horizontale.

Variant de finition 6 : selon la revendication 1 mais le réassemblage du verre se fait selon la technique traditionnelle du vitrage en plomb. Bien que le verre et le plomb seront par préférence collés entre eux.

Par préférence, préalablement au collage, on enlèvera aux deux côtés de la ligne de cassure une certaine épaisseur au moyen de fraisage ou de ponçage (le fraisage est préféré), épaisseur égale à celle de la bande que l'on va introduire.

L'avantage de l'application de la technique du vitrage en plomb est que, dans le cas d'une plaque de verre simple, cette technique donnera une solidité plus grande que dans le cas où on ne met qu'une bande en forme de T. Dans le cas d'un double collage « dos à dos », le côté arrière de la bande de plomb (de la technique traditionnelle du vitrage en plomb) donnera des problèmes. Par le fait qu'on ne mette pas seulement le vitrage dans le plomb mais qu'on le colle aussi, le résultat final sera plus solide.

Revendication : Méthode de collage de deux plaques de verre avec sur les deux faces une figure de telle façon qu'elles ne se dérangent pas entre elles, peu importe qu'il y ait cuisson ou non. Méthode caractérisée par l'utilisation d'une colle non transparente à laquelle une couleur est éventuellement ajoutée.

L'avantage est que l'impression sur une face ne donne pas d'image de reste perturbante de l'autre côté et qu'on a pas de vision différente d'une même image des deux faces de la plaque de verre. De plus, l'avantage est que l'on peut utiliser deux images non liées.

Revendication : Méthode de collage de deux plaques de verre avec sur les deux faces une figure de telle façon qu'elles ne se dérangent pas entre elles, peu importe qu'il y ait cuisson ou non.

Méthode caractérisée par le collage entre-elles d'une pellicule non-transparente dans n'importe quelle matière et n'importe quelle couleur.

L'avantage est que l'impression sur une face ne donne pas d'image de reste perturbante de l'autre côté et qu'on a pas de vision différente d'une même image des deux faces de la plaque de verre. De plus, l'avantage est que l'on peut utiliser deux images non liées.

Revendication : Méthode de renforcement de l'effet du matage et du sablage, méthode qui rend invisible l'arrière-plan d'une plaque de verre transparente qui n'est pas munie d'une couche réfléchissante. Ceci après qu'une décoration éventuelle y soit mise, sans qu'il y ait nécessairement cuisson au four.

Méthode caractérisée par l'application d'une couche ou d'une peinture non-transparente, éventuellement colorée, par derrière en cas de verre simple, ou bien entre les feuilles ou par l'arrière en cas de feuilles multiples collées.

L'avantage se situe dans le fait que grâce à cette méthode, la figure appliquée ressort plus clairement sur le verre mat ou sablé. Un arrière-plan non uniforme ou un arrière-plan avec des lignes ou des couleurs ou des patrons de couleur qui perturbent seront alors totalement invisibles.

Revendication : Méthode qui renforce l'effet du matage et du sablage et qui rend invisible l'arrière-plan d'une plaque transparente qui n'est pas muni d'une couche réfléchissante, ceci après qu'un éventuel ornement en soit appliqué, sans qu'il soit nécessaire que le verre soit cuit au four.

Méthode caractérisée par l'application, ou bien par l'arrière en cas de verre simple, ou bien entre les feuilles ou par l'arrière en cas de feuilles multiples collées, d'une pellicule non-transparente, éventuellement colorée.

L'avantage est que grâce à cette méthode, la figure ou l'ornement appliqué ressort plus clairement du verre rendu mat ou sablé. Un arrière-plan non uniforme ou un arrière-plan avec des lignes ou des couleurs ou des patrons de couleurs qui perturbent deviendront totalement invisibles.

### Exemple d'exécution optimale :

Deux plaques de verre sont sablées par préférence sous basse pression en utilisant du sable naturel avec un grain de 85 et non pas en utilisant du carbure de silicium qui est agressif, bien que le carbure de silicium puisse aussi être utilisé. Rendre chimiquement mat en traitant dans un bain d'acide est également possible, mais donne un effet très doux.

Trois plaques de verre qui sont de taille égale seront coupées. En tenant compte de l'épaisseur de la couche du col que l'on met entre les plaques, on fraise une rainure dans le cadrage. Ceci dans le cas où le panneau en verre doit être encastré. Le découpage en fragment des plaques en verre qui se trouvent à l'extérieur du panneau se fait de la façon artisanale traditionnelle. On tirera la ligne de coupe du côté poli. On utilisera préférablement la technique de « frappage » du verre. On emballera la pointe alourdie du couteau de verre avec du caoutchouc et on frappera assez fort. On portera particulièrement attention à la logique du découpage et du remontage de la plaque de verre.

Quand on réassemble les plaques de verre, l'ordre du réassemblage doit être tel qu'on tienne compte des éventuels coins aigus. Ces points aigus rendront impossible le remontage d'une pièce sauf si on la replace par le dessus. Mais le col qui doit être mis dans la ligne de cassure ne sera pas uniforme sur la surface de cassure. Toutes les pièces doivent s'ajuster l'une dans l'autre dans une surface en deux dimensions, c'est-à-dire que toutes les pièces doivent s'ajuster l'une dans l'autre sur une surface plane. Dans le cas contraire, les lignes de cassure ne seront pas collées de manière optimale, et il y aura des problèmes lors du recollage. On utilise de préférence une colle deux composants comme par exemple la colle époxy. Les bandes qui couvrent les lignes de cassure seront de préférence collées sur le verre avec de la colle de silicone deux composants. Aussi, quand on utilise des bandes en forme de T, il est préférable d'utiliser une colle de silicone en deux composants. La même chose est valable pour le collage du verre dans les profils traditionnels en plomb pour le vitrage. Vu le fait que les profils en plomb pour le vitrage et la plupart des profils en matériaux synthétiques sont imperméables à l'air et à l'eau, il est préférable d'utiliser des systèmes deux composants. Les profils en plomb ne doivent pas être soudés dans ce cas-là, bien que souder en cas de colle de silicone deux composants ne pose pas de problème. Quand on utilise une plaque de verre simple et si les profils en plomb sont collés sur toutes les facettes où ils sont en contact avec le verre, ils donneront une solidité supplémentaire.

Le système Tiffany demande un temps de travail plus grand que les autres systèmes, mais sera pour certains plus esthétique. En général, on doit préférer des matériaux qui ne contiennent pas de plomb, c'est-à-dire des matières synthétiques, quand on a affaire à des objets qui auront un usage dans la cuisine.

En cas de verre simple, la technique Tiffany ne donnera pas assez de solidité si on ne soude que par un côté. Dans ce cas-là, souder par les deux côtés est strictement nécessaire.

Quand une bande en forme de T ou une bande plate est coupée afin de l'introduire dans la ligne de cassure, il faut faire très attention au fait que la partie du T qui est debout ait précisément l'épaisseur de celle du verre. Aussi le profil en plomb doit-il être adapté à l'épaisseur du verre, bien qu'il doivent être un tout petit peu plus large.

Dans le cas où on utilise un profil en plomb ou lorsque l'on pose une bande en forme de T ou une plate-bande dans la ligne de cassure, on fraisera ou on poncera préalablement au collage, des deux côtés de la ligne de cassure, d'une épaisseur qui est égale à l'épaisseur de la bande que l'on souhaite poser dedans. On fraisera de préférence. Dans le cas de la technique de Tiffany, ceci n'est pas nécessaire, ce qui engendre une économie de temps et de travail.

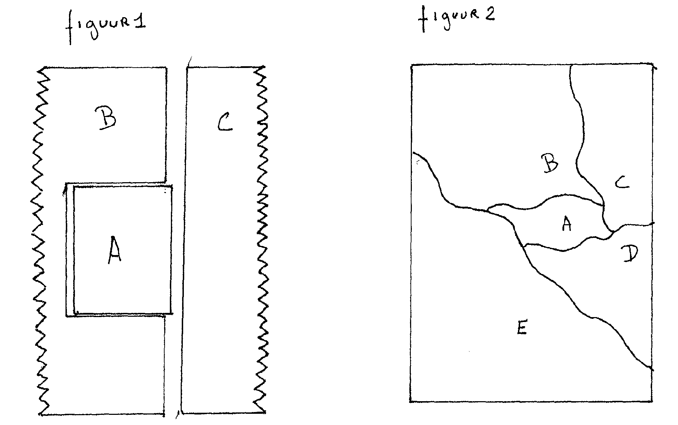

Si on souhaite éviter un jeu entre les pièces collées, on sera obligé de fraiser l'épaisseur de la bande interposée au moins par un côté de la ligne de cassure (voir figure 1). En haut et en bas, il est clair qu'il n'y a pas de place pour la bande collée entre A et B.

Du côté gauche, le posage de la bande entre A et B aura pour effet le glissement vers la droite de sorte que la pièce A glisse vers la droite dans sa totalité, ce qui rend impossible l'ajustement sans jeu entre C et B. Cela nécessite moins de travail de coller les lignes de cassure sans y intercaler de bande mais en les couvrant au contraire d'une bande quelconque.

Quand on réassemble les pièces de verre, il faut faire attention au fait qu'on puisse les glisser les unes dans les autres dans une surface horizontale. Ceci peut être rendu impossible par des angles aigus et irréguliers. On sera alors obligé de poser la pièce par dessus, mais dans ce cas-là, la colle de la ligne de cassure sera chassée (voir figure 2). Il faut d'abord coller les pièces A et B, puis C, ensuite les pièces A, B et C avec la pièce D, et enfin ces quatre dernières avec la pièce E.

Quand on intercale une plate-bande ou une bande en forme de T dans la ligne de cassure, on collera premièrement la bande avec une pièce, on laissera sécher et seulement alors on pourra la coller avec la deuxième (voir figure 2). On collera premièrement la bande à la pièce A, on laisse sécher, et puis on colle à la pièce B. La bande interposée a précisément la longueur de la ligne de cassure entre A et B.

La gaze pour la sérigraphie est fabriqué de préférence en utilisant un dessin déjà hachuré manuellement (voir technique de la gravure sur cuivre). Une hachure afin d'obtenir une gradation du gris et qui comporte aussi des lignes de forme. De manière optimale, on utilise une gaze numéro 110 quand on travaille avec de la peinture fine comme la peinture de porcelaine.

La façon la plus simple de poser une peinture est celle qui consiste à diviser la figure d'un dessin noir et blanc et d'autre part d'une peinture en couleur. Dans ce cas, on peut d'abord mettre la peinture en noir et blanc du côté de l'air et puis on cuit le verre à 580°C pendant six heures. Comme peinture, on utilise la peinture à verre avec un point de fusion très bas, concrètement c'est-à-dire de la peinture pour contour noir. On va sabler par préférence aussi du côté arrière la partie de la plaque de verre qu'on veut cuire au four et puis y poser la couleur à la main. Ceci est presque impossible sans sablage préalable. On peut aussi mettre la couleur par sérigraphie. On cuit de Nouveau à 580°C pendant six heures. La plaque de fond du four doit être couverte aussi bien pendant la première que la 2^{e} cuisson par une couche bien égale de « badwash », c'est-à-dire une couche anti-adhésion. Cette couche de badwash sera facilement nettoyée après la deuxième cuisson au moyen de n'importe quel produit de nettoyage à base d'alcool. Pour le collage des plaques de verre entre-elles, on peut de préférence utiliser de la colle de silicone deux composants qui est diluée et à laquelle on a ajouté de la poudre d'oxyde de titane si on veut utiliser une couleur blanche. On peut obtenir des couleurs pastel en ajoutant des pigments de couleur en petites quantités. Quand on met les silicones sur la plaque de verre, le meilleur que l'on puisse faire est le faire en deux fois. Premièrement, on l'applique avec une spatule dentée et on laisse durcir, et on applique ensuite une deuxième fois avec une spatule sans dent, et on laisse durcir de nouveau. Après quoi, on les colle l'une contre l'autre avec une fine couche. Le dernier collage doit surtout se faire avec de la colle deux composants, ceci en raison du fait que le durcissement a lieu au contact de l'air et de l'humidité dans le cas de colle avec un seul composant. En utilisant d'abord une spatule dentée, et ensuite une spatule sans dent pour appliquer le silicone, on évite des irrégularités visuelles et on obtient une étanchéité parfaite à l'eau. On peut aussi entreposer une pellicule. Dans ce cas-là on utilise de préférence une pellicule souple en matière synthétique. Des films souples seront plus difficiles à appliquer et donneront plutôt des bulles d'air non-esthétiques. On peut aussi intercaler un papier résistant d'au moins 200g/m². Le papier sera préalablement peint avec une peinture à base de white spirit. On colle la pellicule d'abord au moyen de colle de silicone deux composants sur une plaque de verre et ensuite on colle la deuxième plaque de verre sur la pellicule, ceci au moyen d'une colle deux composants également.

Quand on colle trois plaques de verre, dont celle du milieu n'est pas fragmentée, on obtient la plus grande résistance. Dans le cas de plaques de verre collées en trois feuilles ou plus, il sera optimal de placer la colle, la peinture ou la pellicule non-transparente sur le côté « verre » des plaques extrêmes.

Pour le montage dans le cadre, on a pas utilisé la troisième plaque de verre du centre, mais on a utilisé que deux plaques de verre, de chacune 3 mm d'épaisseur, ceci à cause du fait que la rainure standard dans les pays anglo-saxons est de 6,3 mm, et à cause du fait que le cadre donne déjà une solidité par soi-même.

Quand on fait usage de la méthode de renforcement de l'effet de matage ou de sablage et en même temps du fait qu'on rende invisible l'arrière-plan de la plaque de verre, ceci après qu'on y ait éventuellement fixé par cuisson une figure, bien que la fixation par cuisson au four ne soit pas strictement nécessaire

Méthode caractérisée par l'application d'une couche ou d'une peinture ou d'une pellicule non-transparente, éventuellement colorée, par derrière en cas de verre simple, ou bien entre les feuilles ou par l'arrière en cas de feuilles multiples collées. Dans ce cas-là, on procèdera de la même façon comme expliqué précédemment concernant le collage des plaques de verre. De manière optimale, on appliquera la couche ou la pellicule non-transparente entre deux plaques de verre et, en cas de multiples feuilles collées, derrière la première.

## Revendications

1. Revendication 1 : Méthode d'application des nuances de gris dans un dessin sur verre au moyen de sérigraphie.
Méthode **caractérisée par** l'utilisation de la technique traditionnelle de la gravure sur cuivre, au moment de la fabrication du dessin original.

2. Revendication 2 : Méthode d'application de peinture sur verre cuite au four.(vitrifier)
Méthode **caractérisée par** le sablage ou le matage chimique préalable de la plaque de verre dans laquelle la grossièreté ou finesse du sablage ou du matage est partiellement déterminante pour l'épaisseur de la couche de peinture.

3. Revendication 3 : Méthode de réassemblage d'une plaque de verre en partie imprimée et/ou peinte avec de la peinture qui sera fixée par cuisson au four.
Méthode **caractérisée par** la découpe préalable de la plaque de verre en pièce de telle sorte que tous les bords extérieurs de la plaque de verre fassent partie de façon intégrale de ces pièces qui ne seront pas cuites dans le four.

4. Revendication 4 : Méthode de collage de deux plaques de verre avec sur les deux faces une figure de telle façon qu'elles ne se dérangent pas entre elles, peu importe qu'il y ait cuisson (vitrification) ou non.
Méthode **caractérisée par** l'utilisation d'une colle non transparente à laquelle une couleur est éventuellement ajoutée.

5. Revendication 5 : Méthode de collage de deux plaques de verre avec sur les deux faces une figure de telle façon qu'elles ne se dérangent pas entre elles, peu importe qu'il y ait cuisson ou non.
Méthode **caractérisée par** le collage entre-elles d'une pellicule non-transparente dans n'importe quelle matière et n'importe quelle couleur.

6. Revendication 6 : Méthode de renforcement de l'effet du matage et du sablage, méthode qui rend invisible l'arrière-plan d'une plaque de verre transparente qui n'est pas munie d'une couche réfléchissante. Ceci après qu'une décoration éventuelle y soit mise, sans qu'il y ait nécessairement cuisson au four.
Méthode **caractérisée par** l'application d'une couche ou d'une peinture non-transparente, éventuellement colorée, par derrière en cas de verre simple, ou bien entre les feuilles ou par l'arrière en cas de feuilles multiples collées.

7. Revendication 7 : Méthode qui renforce l'effet du matage et du sablage et qui rend invisible l'arrière-plan d'une plaque transparente qui n'est pas muni d'une couche réfléchissante, ceci après qu'un éventuel ornement en soit appliqué, sans qu'il soit nécessaire que le verre soit cuit au four.
Méthode **caractérisée par** l'application, ou bien par l'arrière en cas de verre simple, ou bien entre les feuilles ou par l'arrière en cas de feuilles multiples collées, d'une pellicule non-transparente, éventuellement colorée.

8. Revendication 8 : Selon les revendications 1 à 7 : produits obtenus au moyen des méthodes et procédés comme ils sont décrits dans les revendications 1 à 7.
